# EUROPEAN PATENT SPECIFICATION

(11) **EP 1 173 271 B1**
(45) Date of publication and mention of the grant of the patent: **27.07.2005**
(21) Application number: 00925006.9
(22) Date of filing: 03.05.2000
(51) Int. Cl.: B01F 3/04

(54) **GAS/LIQUID MIXING METHOD**
VERFAHREN ZUM EINBRINGEN EINES GASES IN EINE FLÜSSIGKEIT
PROCEDE DE MELANGE DE GAZ ET DE LIQUIDE

(30) Priority: 05.05.1999 CA 2271170
(43) Date of publication of application: 23.01.2002
(73) Proprietor: Canzone Limited, Fredericton, New Brunswick E3B 7A3 (CA)
(72) Inventor: GLASSFORD, Craig, L., New Maryland, New Brunswick E3C 1E6 (CA)
(74) Representative: Jackson, Derek Charles
(86) International application number: PCT/CA2000/000514
(87) International publication number: WO 2000/067886

(56) References cited:
- EP-A- 0 470 377
- EP-A- 0 732 142
- US-A- 4 268 279
- US-A- 4 950 431
- US-A- 5 032 524
- US-A- 5 254 143

## Description

### BACKGROUND OF THE INVENTION

The use of hollow, microporous fibers for the aeration of waste water containing organic pollutants was proposed many years ago, see for example United States Patent No. 4,181,604, dated January 1, 1980, H. Onishi et al.

More recently, it has been proposed to transfer gas to a liquid in a bubbleless manner using hollow, microporous fibers, see for example United States Patent No. 5,034,164, dated July 23, 1991, M.J. Semmens. The bubbleless transfer of gas into the liquid is highly efficient and reduces the loss or waste of gas significantly. Semmens (column 5, lines 27 to 48) teaches the use of a thin, smooth, chemically resistant, non-porous, gas permeable polymer coating on the exterior surface of a major portion of each fiber to inhibit the accumulation of debris and microorganism which tend to clog the surface through which the gas diffuses under high pressures of 20 to 60 psi on the interior of the fibers, while achieving higher gas transfer rats and preventing the loss of gas in bubbles. Semmens further states that if the fibers are uncoated, the pressure differential, that is, the pressure of the gas in excess of that of the liquid, has to be below 2 psi. To avoid bubbles. However, Semmens (column 4, lines 39 to 42) states that generally speaking a gas pressure of at least 45 psi above the water will be used. Clearly, at low gas pressures where no bubbles were formed, the transfer was not considered adequate, and sufficient gas pressure was thought necessary to transfer trapped liquid out of the file membrane (see column 4, lines 34 to 36). While the device of Semmens is useful, the gas permeable polymer coating necessitates the use of elevated gas pressures, while the relatively low liquid pressures will ultimately limit the achievable dissolved gas concentration.

It has also been proposed in United States Patent No. 4,950,431, dated August 21, 1990, A.J. Rudick et al, to provide an apparatus, for making and dispensing carbonated water, in which CO₂, pressurized to 31 psi, from hollow semi-permeable membrane fibers is mixed with chilled municipal water in a carbonator housing. It is stated that as long as the water pressure is equal to or greater than the CO₂ pressure inside the hollow fibers, CO₂ will be absorbed directly into the water without the formation of bubbles (column 4, lines 13 to 31). The CO₂ is provided by an input line having a spring biased spool valve which maintains the interior of the carbonator housing pressurized to the level of the CO₂, i.e., 31 psi, and provides the driving force for dispensing the carbonated water (column 4, lines 2 to 8). Further, when the incoming water pressure is greater than 31 psi to the carbonator housing, the carbonator functions as a simple in-line continuous carbonator during a dispenser operation.

Rudick et al is concerned with producing and dispensing carbonated water which will effervesce at atmospheric pressure. Thus, while CO₂ may be absorbed directly into the water without formation of bubbles, it is necessary for the absorbed portions of CO₂ to be of sufficient size to readily coalesce and effervesce, in the manner of a carbonated beverage, when vented to atmospheric pressure by being dispensed by the Rudick et al apparatus. For this to occur, the carbonated water has to be delivered to the drinking cup in a turbulent state.

While the processes of Semmens and Rudick et al are useful, there is a need to not only further enhance the way that gas is transferred to the liquid, but also to increase the amount of gas available in the liquid by increasing the dwell or residence time during which microscopic portions of the gas remain discrete in the liquid before coalescing and exiting from the liquid in the form of bubbles.

US-A-4 268 279 discloses a process which comprises allowing a liquid to contact with the inside of a microporous hollow fiber and a fluid to contact with the outside, thereby allowing the gaseous components contained in both fluids to transfer between the liquid and the fluid.

EP-A-0 723 806 discloses a method for producing ozonized water in which a pressurized ozone gas is dissolved in water to be treated through a porous hollow-fiber membrane. An infinite variable-speed control type pump is provided upstream of the hollow-fiber membrane to maintain the water pressure inside the hollow fibers higher than the ozone gas pressure and to control the water pressure and flow rate. A control mechanism is provided to control the ozone concentration in the treated water on the basis of the ozone concentration.

### SUMMARY OF THE INVENTION

According to the present invention there is provided a method of mixing a gas with a liquid, including the steps of:
a) bringing a mixing liquid into contact in a casing (2) with a mixing liquid repellant side of a microporous membrane having effective pore pathway diameters in the range 0.01 to 5 µm,
b) bringing a gas into contact in the casing with the opposite side of the microporous membrane to that contacted by the liquid,
c) regulating the gas/liquid pressure relationship in the casing so that,
   i) the gas pressure does not exceed the liquid pressure, and
   ii) liquid does not pass through the membrane micropores,
   whereby discrete, microscopic portions of the gas are brought into contact with the liquid, and
d) conveying the gas liquid mixture thus produced in a low turbulence incurring manner from the membrane to a receiving vessel therefor.

The microporous membrane may be in the form of a plurality of similar microporous hollow fibers, and the gas may be passed down the hollow fibers while the liquid is passed over the liquid repellant outer sides of the hollow fibers.

The membrane may have a porosity of at least 10%.

Gas/liquid mixture in the receiving vessel may be frozen to increase the retention time of the discrete microscopic portions of the gas in the liquid.

The gas pressure may be at least 0.07 Kg/cm² less than that of the liquid.

The gas may be oxygen and the liquid may be water. Alternatively, the gas may be CO₂ and the liquid may be water. As a further alternative, the gas may be SO₂ and the liquid may be water.

In an embodiment of the invention a gas outlet is provided from the casing; the microporous membrane is in the form of a plurality of similar, microporous, hollow fibers bundled together in the casing; a first support means is at one end of the bundle and seals that end of the bundle with open ends of the fibers at that end of the bundle communicating with a gas inlet; a second support means is at the other end of the bundle and seals that end of the bundle with open ends of the fibers at that end of the bundle communicating with the gas outlet; and a liquid inlet and a gas/liquid mixture outlet are on opposite sides of the casing for liquid to flow across substantially the whole outer surface of the fibers.

The bundle of fibers may comprise the warp of a woven, open mesh structure, and solid, water repellant fibers may be provided forming the weft, and the open mesh structure may be coiled to form the bundle.

Until the present invention was made, it was not possible to produce discrete, macroscopic portions of the gas mixed with the liquid, which would remain stored in the liquid in the discrete form for such long periods of time as to provide a useful novel product which for example, could be used in aerobic or chemical processes to provide oxygen for hitherto unattainable lengths of time without the need of more "forced" means of aeration.

The present invention provides a novel gas/liquid mixture which, when compared to known gas/liquid mixtures, has
a) a surprisingly greater mass of gas in a given volume of liquid, to the point of supersaturation, and
b) exhibits a vastly increased period during which gas remains dispersed in the liquid in discrete portions.

This long dwell time of supersaturated gas in the liquid, in discrete portions is particularly useful in processes which use oxygen consuming microorganisms in water, or chemical reactions accelerated by oxygen, because the excess oxygen provided by supersaturation tends to replace the consumed oxygen before being lost to atmosphere.

One possible explanation of these surprising results may be due to a very large distribution in the liquid through the membrane micropores of discrete, microscopic portions (nano-portions) of the gas. These microscopic portions of the gas, being gently transferred to the liquid in a widely distributed, dense population remain suspended therein in the discrete form for a very long period of residence because of their relatively low buoyancy, compared to bubbles, provided that the gas/liquid mixture is handled gently, that is, with low turbulence. These conditions cannot be achieved if the gas enters the liquid at elevated pressure to that of the liquid because the discrete, microscopic portion of the gas expand and thus increase in buoyancy to rise in the liquid creating turbulence therein, and, because of the dense population, combine to form bubbles which rapidly float upwardly, and escape from the liquid, regardless of how the gas/liquid mixture is handled.

It should be noted that the present invention is described in the following embodiment with the gas and liquid slightly above atmospheric pressure. However, it is within the scope of the present invention for the gas and liquid to be at atmospheric pressure, or even under a vacuum, provided the relationship between the gas and liquid pressures is adhered to, and the gas/liquid mixture is handled gently, that is, not subjected to a turbulence producing pressure changes.

In this specification, "low-liquid turbulence-incurring, gas/liquid mixture conveying and delivering", means that the gas/liquid mixture is handled gently so that at least a major portion of the discrete, microscopic portions of gas remain discrete, for example, the gas/liquid mixture,
i) is transported fairly smoothly,
ii) is only subjected to gentle pressure changes, if any, and
iii) is only caused to import gently on any surface.
These are design parameters for the apparatus which can readily be taken into consideration by persons skilled in the art.

### BRIEF DESCRIPTION OF THE DRAWINGS

In the accompanying drawings which illustrate, by way of example, embodiments of the present invention,
Figure 1 is a flow diagram of an apparatus used to verify the present invention,
Figure 2 is a diagrammatic, sectional side view of the gas/liquid contacting device used in the apparatus shown in Figure 1,
Figure 3 is an end view of the portion of a bundle of hollow, microporous fibers shown in Figure 2, before being coiled into the bundle,
Figure 4 shows graphs depicting the oxygen transfer data obtained by tests using the apparatus shown in Figures 1 to 3,
Figure 5 shows graphs depicting the oxygen content in water plotted against time, and
Figures 6 and 7 show graphs depicting the extraction of copper from a slurry of mined copper using water saturated in oxygen from the tests whose results are depicted in graphs of Figure 4.

### DETAILED DESCRIPTION OF THE PREFERRED EMBODIMENTS

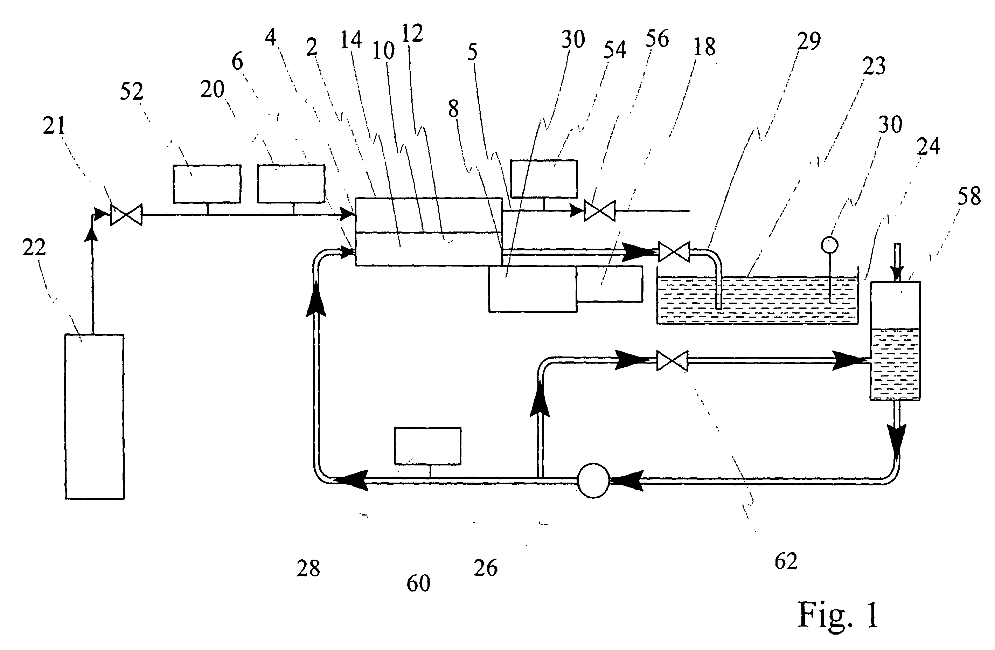

In Figure 1 there is shown a gas/liquid mixing apparatus, comprising:
a) a casing 2 having a gas inlet 4, a liquid inlet 6 and a gas/liquid mixture outlet 8,
b) a microporous membrane 10 in the casing 2, the membrane having,
   i) effective, gas/liquid contacting, pore pathway diameters generally, in the range 0.01 to 5µm, and
   ii) a side 12 that is repellent to the liquid to be mixed,
   the membrane 10 dividing the casing interior 14 into a liquid path, on the water repellent side 12, between the liquid inlet 6 and the gas/liquid mixture outlet 8, and a gas chamber from the gas inlet 4,
c) fluid pressure regulating means connected to the casing 2, comprising a liquid back pressure regulator and gauge 18, and a gas pressure regulator and gauge 20, for regulating the gas/liquid pressure relationship in the casing 2 so that,
   i) the gas pressure does not exceed the liquid pressure, and
   ii) pressurized liquid does not pass through the membrane micropores, and
d) a low-liquid-turbulence incurring gas/liquid mixture conveying and delivery device, in the form of a pipe 29, having a rounded corner and connected to the gas/liquid mixture outlet 8 and terminating below a liquid level 23 of a tank 24 to gently deliver gas/liquid mixture thereto.

The apparatus may also include gas outlets 5 for removing any liquid that may collect in the gas chamber 2. The gas outlet 5 is also useful for connecting two or more casings 2 in series flow.

The apparatus shown in Figure 1 was used in tests to verify the present invention and included a gas valve 21, a high pressure oxygen cylinder 22, the open-topped, gas/liquid mixture tank 24, forming a receiving vessel for gas/liquid mixture, a variable speed liquid pump 26, a liquid pressure regulator and gauge 28, and a dissolved oxygen analyzer 30. The pipe 29 was transparent to enable observation of the condition of the gas/liquid mixture therein. Gas flow meters 52 and 54 were provided together with a gas valve 56. The liquid feed was supplied from tank 58 and accurately controlled by return line 60 and valve 62.

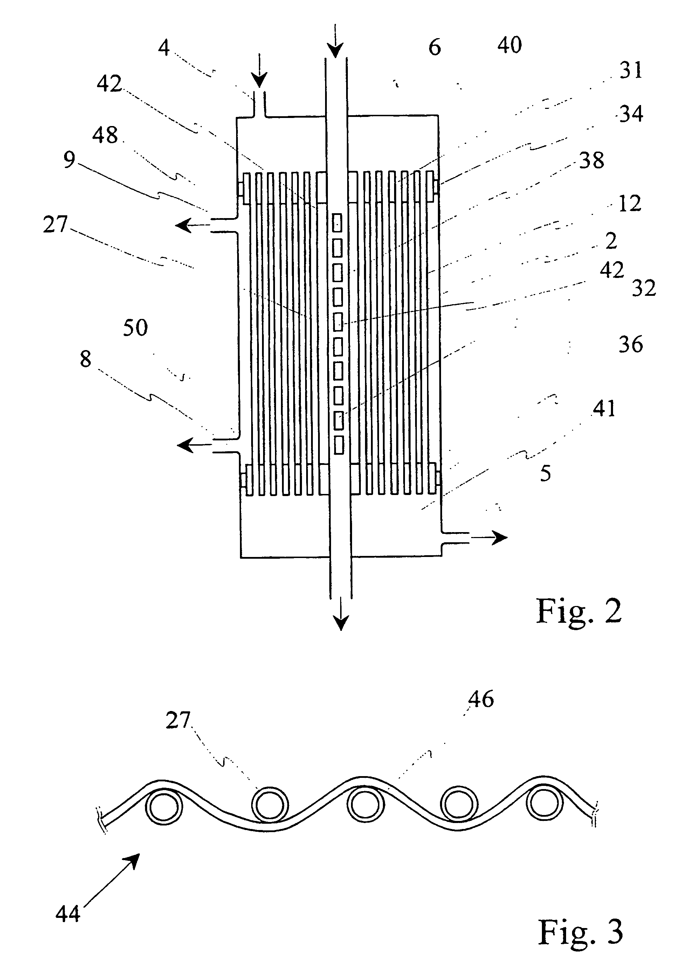

In Figure 2, similar parts to those shown in Figure 1 are designated by the same reference numerals and the previous description is relied upon to describe them.

In Figure 2, the microporous membrane 10 comprises one of a bundle of hollow, microporous fibers 27, each with a liquid repellent outer side 12 and sealed in epoxy resin discs 31 and 32, which, in turn, are sealed in the casing 2 by 'O'- rings 34 and 36 respectively. The assembly comprising the bundle of microporous fibers 27 and discs 31 and 32, are supported by a central support tube 38 which is sealed in the casing and spaces the discs 31 and 32 to provide plenum chambers 40 and 41. Plenum chamber 40 receives gas from inlet 4, while plenum chamber 41 passes gas to outlet 5 to the flow meter 54 (Figure 1).

The upper ends of the microporous fibers have exposed, open ends above the disc 31, to the plenum chamber 40.

The lower ends of the microporous fibers have exposed, open ends below the disc 32 to the plenum chamber 41.

The central support tube 38 provides the liquid inlet 6 and has liquid outlet ports 42 to the portion of the interior of the casing 2 between the discs 31 and 32.

The gas/liquid mixture outlet 8 is one of two, similar outlets, the other one being designated by reference numeral 9. Both of the outlets 8 and 9 are connected to the pipe 29 (Figure 1).

In other embodiments, either outlet 8 or 9 is used to recirculate gas/liquid mixture for further gas enrichment. In Figure 3, similar parts to those shown in Figures 1 and 2 are designated by the same reference numerals and the previous description is relied upon to describe them. Figure 3 shows a portion 44 of the hollow, microporous fibers 27 (Figure 21) before they are coiled into the bundle. The microporous fibers 27 from the warp of a woven, open mesh structure, with solid fibers 46, of a similar liquid repellent substance to the microporous fibers, forming the weft. In the tests, in which oxygen gas was mixed with liquid water, the open-topped tank 24 (Figure 1) had a capacity of 240L, and was ~ 90cm x 45cm x 60cm high. The hollow, microporous fibers 27 (Figures 2 and 3) each had an outside diameter of about that of a fishing line and were made from polyethylene or polypropylene, both of which are water repellent. The size range of the micropores was controlled in the microporous fiber manufacturing process to produce predetermined, effective pathway diameters, through the walls of the hollow, microporous fibers. The gas into liquid breakthrough pressure of the microporous membranes was of the order of 40 psi(2.8Kg/cm²). The specific surface area of the bundle of hollow, microporous fibers was about 3,000 square meters per cubic metre of volume.

More specifically, the following
Table I gives details of two different, polyethylene fibers used in the tests.

**TABEL I**

| FIBER εp | εp | Do | Di |
|---|---|---|---|
| I | >0.7 | ~540 | ~350 |
| II | >0.7 | ~380 | ~280 |

In Table I,
εp is the average pore size in microns,
Do is the outside diameter of the fibers in microns, and
Di is the inside diameter of the fibers in microns.

The following Table II gives details of bundled fibres used in modules forming the apparatus shown in Figure 2 for different tests.

**TABLE II**

| Module | L | No. | Dc | Dg | FIBRE |
|---|---|---|---|---|---|
| I | 31 | 6400 | 2.667 | 7.79 | I |
| II | 31 | 12800 | 2.667 | 7.79 | II |
| III | 66 | 6400 | 2.667 | 7.79 | I |

In Table II,
L is the length of the fibers in cms,
No is the number of fibers in the bundle
Dc is the inside diameter of the bundle, and
Ds is the outside diameter of the bundle.

In the tests, the pump 26 was supplied with city water via the tank 58 which was a 45 gallon holding tank. Pressurized water was fed from the pump 26 to the inlet 6. Simultaneously, pressurized oxygen was supplied to the inlet 4 with care taken to assure that the oxygen pressure in the casing 2 never exceeded the water pressure. (This would have resulted in large quantities of large oxygen bubbles entering the water and actually reduce the Oxygen transfer rate!) The interfacial area created by the micropores allowed a controlled transfer of oxygen to the water, the driving force for this transfer being the difference in equilibrium oxygen saturation levels between water at atmospheric pressure versus water at elevated pressures. (For example: approximately each atmosphere of oxygen partial pressure that water is exposed to raises its equilibrium oxygen saturation level by 40 ppm.)

All relevant pressures, flows and temperatures were recorded. The oxygen levels exiting at outlets 8 and 9 were monitored by a specially designed dissolved oxygen meter forming analyzer 30, capable of measuring dissolved oxygen under pressure and up to 200 ppm. Inlet water oxygen content was determined prior to each run and was been found to be at saturation levels (8-12 ppm). The oxygen flow was measured by an oxygen mass flow meter forming the meter 52.

Although theoretically unnecessary, a small oxygen purge flow was maintained through the fibres to the outlet 5 to maintain clear passage into the fibre bores, which can become blocked with water if there are any flaws in the disc 31 and 32. If the unit was shut down for more than one hour it was completely drained of water and flushed dry with air. This prevented condensation of water vapour inside the fibre bores.

The data obtained from the tests was then correlated using standard mass transfer 'numbers' (Sherwood, Reynolds and Schmidt). The form of this equation used was somewhat different than usually found in literature, however. Instead, it relied upon the experience and the unpublished work of the applicant and his earlier work in mass transfer in hollow fibre systems' As will be seen in the accompanying graphs, the correlation is excellent.

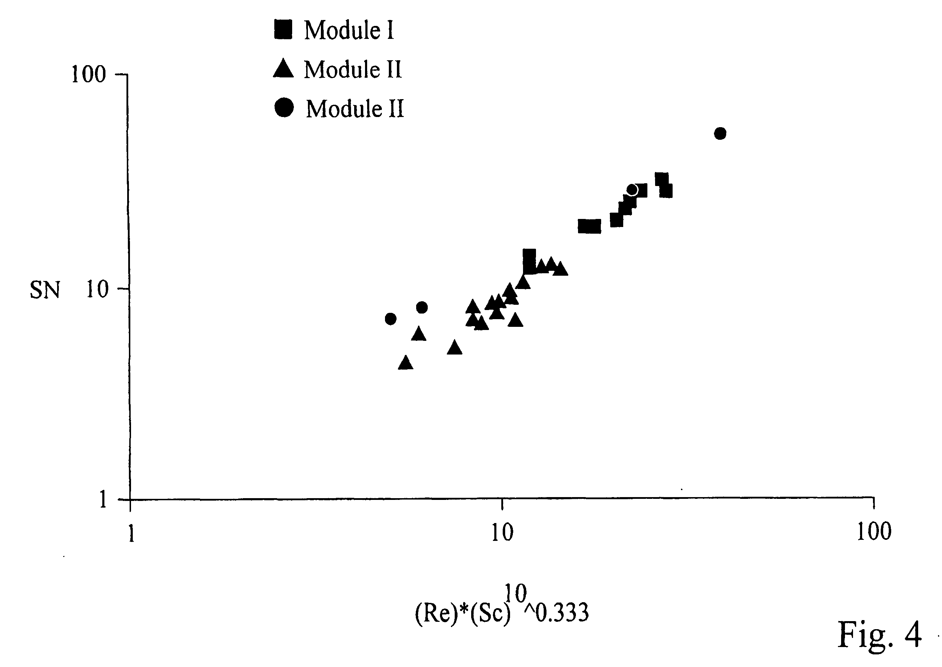

The results of these correlations are given in Figure 4 where the Sherwood number [SN] is plotted against the 1/3 power [(Re)*(Sc)¹⁰ 0.333].

In Figure 4,
■ are results using module I,
▲ are results using module II, and
● are results using modue III.

As will be seen from Figure 4, the correlations are excellent.

The final module manufacturing step was the 'opening of the fibres'. This was accomplished, normally, by a high speed, carbide tipped, rotary saw blade. An 'open fibre' test was then performed on each module to determine the 'goodness' of the cut. This was done by measuring the pressure drop of water flowing down the fibre bores. The term 'open fibre' is actually a misnomer in that the actual pressure drop was compared to the theoretical pressure drop. For example, modules Type 1 & 3 used previously, routinely gave an open fibre result of >95% (when the blade was sharp). This did not mean that 5% of the fibres were not open, only that the module was behaving as if 5% of the fibres were not open (they may or may not have been open). The test ignored inlet and exit losses as well as any fibre 'roundness' factors, or any obstructions blocking the flow. The type 2 module gave an open fibre result of about 18%. This meant that the pressure drop down the fibre bore was over 5 times what it skhould have been. A fibre totally physically blocked is unavailable to be used for mass transfer. This would explain the slightly lower than expected results for module Type II. On the other hand, since the actual flow of oxygen down the fibre bores is so small, a partial blockage or obstruction would actually have had very little effect on the overall oxygen transfer.

In an effort to understand what is happening, each of a Type 2 and Type 1 module, previously saw cut, had an additional (~1/8") slice cut off with a high pressure water jet. As well, each slice was photographed comparing the two cuts.

Physically the water jet cuts looked cleaner and caused less 'yellowing' of the epoxy resin, since it did not produce heat. However, the open fibre tests results were identical. The photographs showed more 'debris' on the saw side of the slices as well as the same degree of 'non-roundness' of each of the two types of fibres. It may well be that the initial saw cut throws (epoxy) debris back (further) up the fibre bores causing blockage in the smaller diameter fibre, but little or no blockage in the larger fibres.

A series of supersaturation decay tests was carried out in which four vessels of various geometries were charged with Highly Oxygenated Water from the previous tests. These vessels were left quiescent for a period of days. Dissolved oxygen contents were closely monitored over this period of time, care being taken to take measurements at consistent depths within the vessels.

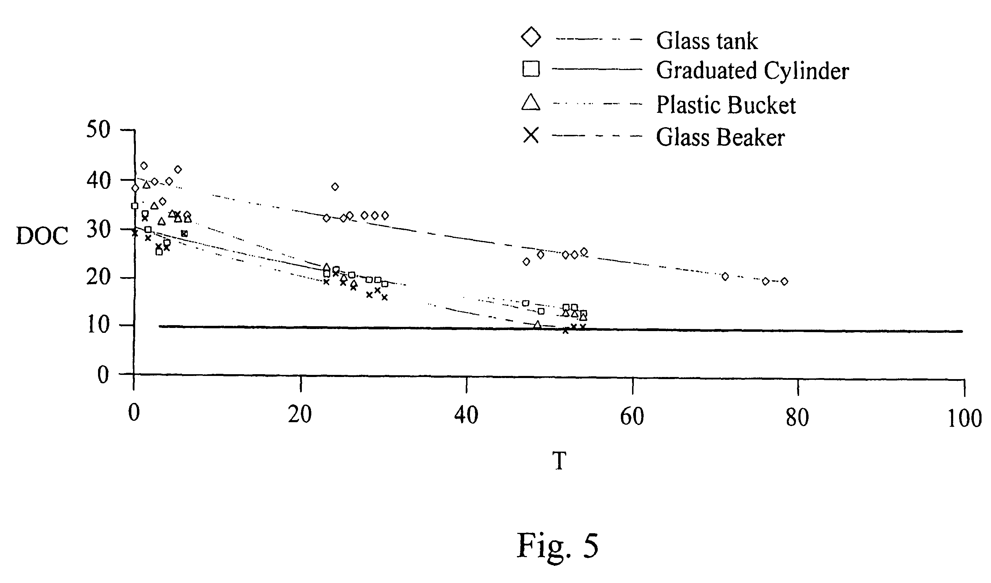

The results of these tests are shown in Figure 5 where the oxygen content (DOC) in the water in ppm is plotted against the time (T) in hours that the Highly Oxygenated Water has been allowed to remain in the vessel.

In Figure 5
◆ and ―- represent a glass tank (depth = 54cm),
■ and ― represent a graduated cylinder (depth = 38cm),
▲ and ― ― represent a plastic bucket (depth = 30cm), and
× ― ― represents a glass beaker (depth = 18cm).

The thick, horizontal line represents saturation level of oxygen in the water.

The tests showed that a significant amount of the oxygen remained in the water for at least two days.

The tests also showed that the decay rate was clearly lower as the vessel, and therefore the probe, depth increased.

The test results indicated, that gas/liquid contacting apparatus and method according to the present invention is highly efficient, but, surprisingly, once the liquid pressure is reduced, creating a supersaturated condition, the excess gas (oxygen remains in quasi-solution in the liquid (water). One possible explanation is that this method of gas/liquid mixing, followed by gentle handling, allows the supersaturation tc take the form of 'nano bubbles'. These 'nano bubbles' take a long time to find each other and combine to form bubbles large enough and buoyant enough to rise to the surface of the liquid (water). Another surprising result is that excess gas (oxygen) provided in the liquid (water) by the present invention, if the liquid is handled gently, remains therein for such a long time. This long retention of gas (oxygen) in the liquid (water) would be highly beneficial in, for example, gas (oxygen) consuming wastewater treatment or chemical processing where the excess gas (oxygen) would remain in the liquid (water) long enough to replace that being consumed.

In a further test, water that had been supersaturated with oxygen by the previous tests was collected in a flexible container (a domestic balloon) and then frozen. When this frozen, "highly oxygenated water", was placed in a container of deoxygenated city water and allowed to thaw in the balloon, the oxygen content of the city water rose 2 to 3 times more rapidly under one atmosphere of pressure than a similar control container which did not contain a balloon. From this it would appear that supersaturated liquid produced according to the present invention has unique properties that can be used where for example, oxygenation of a liquid is required without the use of pressurized cylinders and powered oxygenation equipment, for example, in the transportation of live fish or seafood.

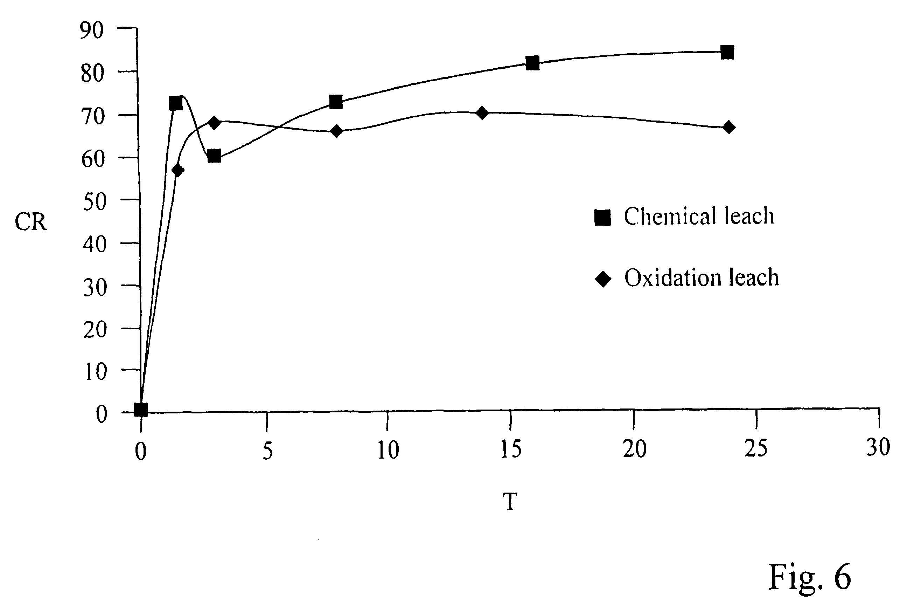

In yet further tests, liquid that had been supersaturated with oxygen from the previous tests, was used to leach copper from mineral slurries. The results of these tests are shown in the attached Figures 5 and 6, wherein copper recovery (CR)% is plotted against time (T) hours that oxygen or air was added to the slurry.

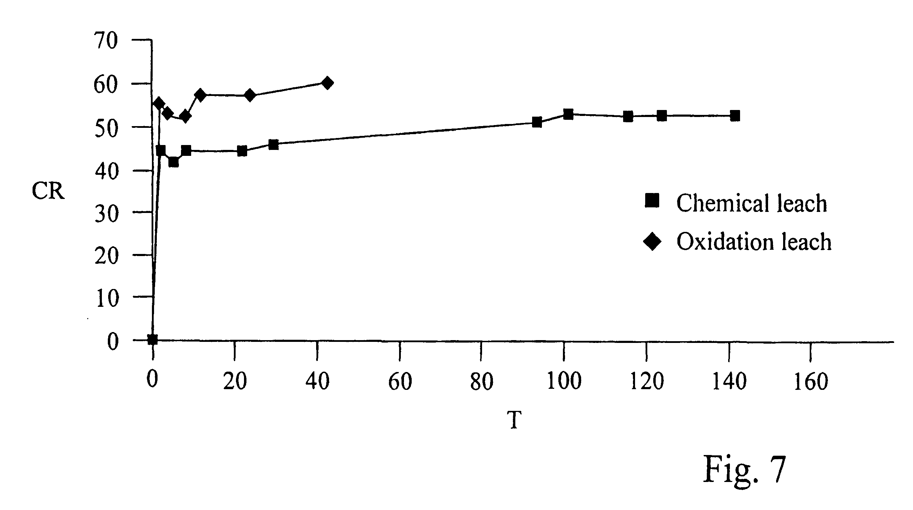

In Figures 6 and 7,
■ shows the results of the known acid leaching process where oxidation enhancing ferric sulphate is added to the slurry while air is bubbled through it, and
◆ shows the results of circulating the supersaturated liquid in the slurry, to provide oxygen levels of ~ 35 to 40 ppm in the slurry, instead of bubbling air through it, and without the addition of ferric sulphate.

In the tests of Figure 6, the supersaturation increased the sopper extraction by 27% and reduced the acid consumption by 40%.

In the tests shown in Figure 7, the supersaturation increased the sopper extraction by 25% and reduced the acid consumption by 50%.

The test results gave some indication of the significant advantages of the present invention over known oxygen/water mixing processes. A large part of the operating cost of any oxygenation process is the power consumption required to transfer the oxygen to the water, and this is also an excellent performance indicator. Power consumption is normally expressed in terms of standard aeration efficiency (SAE), and the units it is expressed in are pounds of oxygen used per hour per applied horsepower, and this is used in the following comparison using a Type III module with liquid flows of 5 to 6 litres per minute and pressure less than 20 p.s.i.

| Mode of Oxygen Transfer | SAE (# O₂/hr/hp) |
|---|---|
| Conventional mechanical | |
| Agitation/surface aeration | ~ 1.0 |
| Conventional Microbubble diffuses* | ~ 2.0 to 2.5 |
| Present invention | 14 to 18 |

| | |
|---|---|
| *Source: Aquatic & Co. Systems, Orlando, Florida, USA. | |

It should also be noted that in the case of conventional bubble diffusers, a general rule of thumb (obtained from Aquatic & Co Systems), indicates that only ~1% of all the oxygen used is absorbed per foot of tank depth. This means that in a 10 foot tank, 90% of the oxygen used escapes to atmosphere and if pure oxygen is used this represents a significant increase in the cost. By comparison, the present invention does not encounter this problem because the micro portions of oxygen remain in the water for very long periods, in fact the period is sufficiently long for any loss to atmosphere to be negligible in say, processes where the oxygen is consumed.

In other embodiments of the present invention, the hollow, microporous fibers comprise the weft of an open mesh structure.

Preferably, the liquid inlet 6 (Figure 2) has a rounded corner 48 leading to the interior of the casing 2, and the gas/liquid mixture outlet 8 has a rounded corner 50 leading from the interior of the casing 2.

Other gases which may be used in the present invention are, for example SO₂, O₃, N₂, CH₄, CO₂, C₂H₆, C₂H₄, C₃H₈, F₂ and Cl.

Other liquids which may be used in the present invention are, for example, any acids, bases or hydrocarbons to which the membrane material is repellent.

By way of further exemplification, we have demonstrated that the method according to the invention applies to the infusion of other gases in compatible liquids. Compatibility includes a degree of solubility of the gas in the liquid, and the liquid is repellant to the membrane material.

For example, when using the same device of the type described above for infusion of carbon dioxide in water, it has been observed that the gas consumption in the infusion process, determined by means of a mass flow meter located on the gas inlet line just prior to an infusion device, shows that gas consumption is approximately 100 times greater than the consumption when the gas being infused is oxygen. This is consistent with the theoretical solubility of carbon dioxide in water relative to oxygen, and Henry's law. It will thus be appreciated by those skilled in the art that the method according to the invention can be extrapolated to other water-soluble gases. This would also indicate, for example, that the method described herein has utility in areas such as pH control.

Moreover, when a device such as that described herein is placed at the bottom of a water column, and infused with sulfur dioxide to a pressure just below that of the hydrostatic head of the column, and when the supply of sulfur dioxide to the device is subsequently shut off, the pressure on the gas line drops, indicating that sulfur dioxide is being absorbed by the water. The pressure will continue to drop and will approach absolute vacuum, if the quantity of water in the column is sufficient. This too is consistent with the theory described above, since sulfur dioxide is extremely soluble in water. Accordingly dissolved gases such as SO₂ and NOₓ etc, can play a significant role, for example, in mineral leaching applications

## Claims

1. A method of mixing a gas with a liquid, **characterised by** the steps of:
a) bringing a mixing liquid into contact in a casing (2) with a mixing liquid repellant side (12) of a microporous membrane (10) having effective pore pathway diameters in the range 0.01 to 5 µm,
b) bringing a gas into contact in the casing with the opposite side of the microporous membrane to that contacted by the liquid,
c) regulating the gas/liquid pressure relationship in the casing so that,
i) the gas pressure does not exceed the liquid pressure, and
ii) liquid does not pass through the membrane micropores,
whereby discrete, microscopic portions of the gas are brought into contact with the liquid, and
d) conveying the gas liquid mixture thus produced in a low turbulence incurring manner from the membrane to a receiving vessel (24) therefor.

2. A method according to claim 1, **characterised in that** the microporous membrane (10) is in the form of a plurality of similar microporous hollow fibers (27), and the gas is passed down the hollow fibers while the liquid is passed over the liquid repellant outer sides (12) of the hollow fibers.

3. A method according to claim 1 or 2, **characterised in that** the membrane has a porosity of at least 10%.

4. A method according to any preceding claim, **characterised in that** gas/liquid mixture in the receiving vessel (24) is frozen to increase the retention time of the discrete microscopic portions of the gas in the liquid.

5. A method according to any preceding claim, **characterised in that** the gas pressure is at least 0.07 Kg/cm² less than that of the liquid.

6. A method according to any preceding claim, **characterised in that** the gas is oxygen and the liquid is water.

7. A method according to any one of claims 1 to 5, **characterised in that** the gas is CO₂ and the liquid is water.

8. A method according to any one of claims 1 to 5, **characterised in that** the gas is SO₂ and the liquid is water.

9. A method according to any preceding claim, **characterised in that**: a gas outlet (5) is provided from the casing (2); the microporous membrane (10) is in the form of a plurality of similar, microporous, hollow fibers (27) bundled together in the casing; a first support means (31) is at one end of the bundle and seals that end of the bundle with open ends of the fibers at that end of the bundle communicating with a gas inlet (4); a second support means (32) is at the other end of the bundle and seals that end of the bundle with open ends of the fibers at that end of the bundle communicating with the gas outlet (5); and a liquid inlet (6) and a gas/liquid mixture outlet (8) are on opposite sides of the casing for liquid to flow across substantially the whole outer surface of the fibers.

10. A method according to claim 9, **characterised in that** the bundle of fibers (27) comprises the warp of a woven, open mesh structure, and solid, water repellant fibers (26) are provided forming the weft, and the open mesh structure is coiled to form the bundle.

## Patentansprüche

1. Verfahren zum Mischen eines Gases mit einer Flüssigkeit, durch die folgenden Schritte **gekennzeichnet**:
a) Inkontaktbringen einer Mischungsflüssigkeit in einem Gehäuse (2) mit einer Mischungsflüssigkeit abweisenden Seite (12) einer mikroporösen Membran (10), die effektive Porenpfaddurchmesser im Bereich von 0,01 bis 5 µm aufweist,
b) Inkontaktbringen eines Gases im Gehäuse mit der der von der Flüssigkeit kontaktierten Seite gegenüber liegenden Seite der mikroporösen Membran,
c) Regulieren des Gas/Flüssigkeits-Druckverhältnisses im Gehäuse, so dass
i) der Gasdruck den Flüssigkeitsdruck nicht übersteigt und
ii) Flüssigkeit nicht durch die Membranmikroporen hindurchfließt,
wobei separate mikroskopische Teile des Gases mit der Flüssigkeit in Kontakt gebracht werden, und
d) Befördern des so produzierten Gas/Flüssigkeits-Gemischs auf wenig Turbulenzen verursachende Weise von der Membran zu einem Aufnahmegefäß (24) dafür.

2. Verfahren nach Anspruch 1, **dadurch gekennzeichnet, dass** die mikroporöse Membran (10) in der Form mehrerer gleicher mikroporöser Hohlfasern (27) ist und das Gas die Hohlfasern herunter geleitet wird, während die Flüssigkeit über die Flüssigkeit abweisenden äußeren Seiten (12) der Hohlfasern geleitet wird.

3. Verfahren nach Anspruch 1 oder 2, **dadurch gekennzeichnet, dass** die Membran eine Porosität von mindestens 10 % aufweist.

4. Verfahren nach einem der vorhergehenden Ansprüche, **dadurch gekennzeichnet, dass** das Gas/Flüssigkeits-Gemisch im Aufnahmegefäß (24) gefroren wird, um die Verweilzeit der separaten mikroskopischen Teile des Gases in der Flüssigkeit zu verlängern.

5. Verfahren nach einem der vorhergehenden Ansprüche, **dadurch gekennzeichnet, dass** der Gasdruck mindestens um 0,07 kg/cm² geringer als der der Flüssigkeit ist.

6. Verfahren nach einem der vorhergehenden Ansprüche, **dadurch gekennzeichnet, dass** es sich bei dem Gas um Sauerstoff und bei der Flüssigkeit um Wasser handelt.

7. Verfahren nach einem der Ansprüche 1 bis 5, **dadurch gekennzeichnet, dass** es sich bei dem Gas um CO₂ und bei der Flüssigkeit um Wasser handelt.

8. Verfahren nach einem der Ansprüche 1 bis 5, **dadurch gekennzeichnet, dass** es sich bei dem Gas um SO₂ und bei der Flüssigkeit um Wasser handelt.

9. Verfahren nach einem der vorhergehenden Ansprüche, **dadurch gekennzeichnet, dass**: ein Gasablass (5) vom Gehäuse (2) vorgesehen ist; die mikroporöse Membran (10) in der Form mehrerer gleicher mikroporöser Hohlfasern (27) ist, die im Gehäuse zusammengebündelt sind; ein erstes Unterstützungsmittel (31) an einem Ende des Bündels vorliegt und das Ende des Bündels mit offenen Enden der Fasern an dem Ende des Bündels, das mit einem Gaseinlass (4) in Verbindung steht, abdichtet; ein zweites Unterstützungsmittel (32) am anderen Ende des Bündels vorliegt und das Ende des Bündels mit offenen Enden der Fasern an dem Ende des Bündels, das mit dem Gasablass (5) in Verbindung steht, abdichtet; und ein Flüssigkeitseinlass (6) und ein Gas/Flüssigkeits-Gemischablass (8) sich an gegenüber liegenden Seiten des Gehäuses befinden, damit Flüssigkeit über im Wesentlichen die gesamte Außenfläche der Fasern fließt.

10. Verfahren nach Anspruch 9, **dadurch gekennzeichnet, dass** das Bündel aus Fasern (27) die Webkette einer gewobenen, grobmaschigen Struktur umfasst und feste, Wasser abweisende Fasern (26) vorgesehen sind, die den Eintrag bilden, und die grobmaschige Struktur aufgespult ist, um das Bündel zu bilden.

## Revendications

1. Procédé pour mélanger un gaz avec un liquide, **caractérisé par** les étapes suivantes :
a) mise en contact d'un liquide mélangeur dans une enveloppe (2) avec un côté répulsif (12) vis-à-vis du liquide mélangeur d'une membrane microporeuse (10) ayant des diamètres effectifs de passages des pores dans la gamme 0,01 à 5 µm,
b) mise en contact dans l'enveloppe d'un gaz avec le côté de la membrane microporeuse opposé à celui en contact avec le liquide ;
c) régulation du rapport de pression gaz/liquide dans l'enveloppe de manière à ce que
i) la pression du gaz ne dépasse pas la pression du liquide, et que
ii) le liquide ne passe pas à travers les micropores de la membrane,
suite à quoi des portions microscopiques discrètes du gaz sont mises en contact avec le liquide, et
d) acheminement du mélange gaz liquide ainsi produit d'une manière entraînant des turbulences faibles de la membrane jusqu'à un récipient récepteur (24) pour celui-ci.

2. Procédé selon la revendication 1, **caractérisé en ce que** la membrane microporeuse (10) est sous la forme d'une pluralité de fibres creuses microporeuses similaires (27), le gaz passant le long des fibres creuses tandis que le liquide passe sur les côtés extérieurs répulsifs (12) vis-à-vis du liquide des fibres creuses.

3. Procédé selon la revendication 1 ou 2, **caractérisé en ce que** la membrane a une porosité d'au moins 10 %.

4. Procédé selon n'importe quelle revendication précédente, **caractérisé en ce que** le mélange gaz/liquide dans le récipient récepteur (24) est congelé pour augmenter le temps de rétention des portions microscopiques discrètes du gaz dans le liquide.

5. Procédé selon n'importe quelle revendication précédente, **caractérisé en ce que** la pression du gaz est inférieure d'au moins 0,07 kg/cm² à celle du liquide.

6. Procédé selon n'importe quelle revendication précédente, **caractérisé en ce que** le gaz est de l'oxygène et le liquide est de l'eau.

7. Procédé selon n'importe laquelle des revendications 1 à 5, **caractérisé en ce que** le gaz est du CO₂ et le liquide est de l'eau.

8. Procédé selon n'importe laquelle des revendications 1 à 5, **caractérisé en ce que** le gaz est du SO₂ et le liquide est de l'eau.

9. Procédé selon n'importe quelle revendication précédente, **caractérisé en ce que** : une sortie du gaz (5) est fournie depuis l'enveloppe (2) ; la membrane microporeuse (10) est sous la forme d'une pluralité de fibres creuses microporeuses similaires (27) rassemblées en faisceau ensemble dans l'enveloppe ; un premier moyen de soutien (31) est à une extrémité du faisceau et scelle cette extrémité du faisceau avec les extrémités ouvertes des fibres à cette extrémité du faisceau communiquant avec une entrée du gaz (4) ; un second moyen de soutien (32) est à l'autre extrémité du faisceau et scelle cette extrémité du faisceau avec les extrémités ouvertes des fibres à cette extrémité du faisceau communiquant avec la sortie du gaz (5) ; et une entrée du liquide (6) et une sortie du mélange gaz/liquide (8) sont sur des côtés opposés de l'enveloppe afin que le liquide s'écoule essentiellement le long de toute la surface extérieure des fibres.

10. Procédé selon la revendication 9, **caractérisé en ce que** le faisceau de fibres (27) comprend la chaîne d'une structure à mailles ouvertes tissée, et des fibres solides hydrofuges (26) sont fournies pour former la trame, et la structure à mailles ouvertes est enroulée pour former le faisceau.
